# EUROPEAN PATENT APPLICATION

(11) **EP 2 889 174 A1**
(43) Date of publication of application: **01.07.2015**
(21) Application number: 13199796.7
(22) Date of filing: 30.12.2013
(51) Int. Cl.: B60L 3/00, B60L 3/04

(54) **Battery management device and power supplying system including the same, electrically isolating each battery unit upon fault**

(71) Applicant: Joy Ride Technology Co., Ltd., Nantou City 540 (TW); Ruan, Chia-Wen, Nantou City 540 (TW)
(72) Inventor: Hsiao, Wei-Yu, 540 Nantou (TW); Ruan, Chia-Wen, 540 Nantou (TW); Wei, I-Tang, 540 Nantou (TW)
(74) Representative: Blumbach Zinngrebe

(57) **Abstract**

A battery management device (3) is configured to detect a present state of an electric device, and control supply of electric power from a battery device (5) to a load (4) of the electric device. The battery device (5) includes a plurality of battery units (51) that are electrically connected. The battery management device (3) disables each of the battery units (51) to stop supply of the electric power to the load (4) when the electric device is detected to be in an abnormal state.

## Description

The invention relates to a battery management device and a power supplying system including the same.

In applications of electric vehicles, multiple battery units are generally connected in series for providing a required high voltage. However, for preventing damage to the battery units due to performance differences, a battery management system is employed to manage and monitor charge-discharge operations of the battery units.

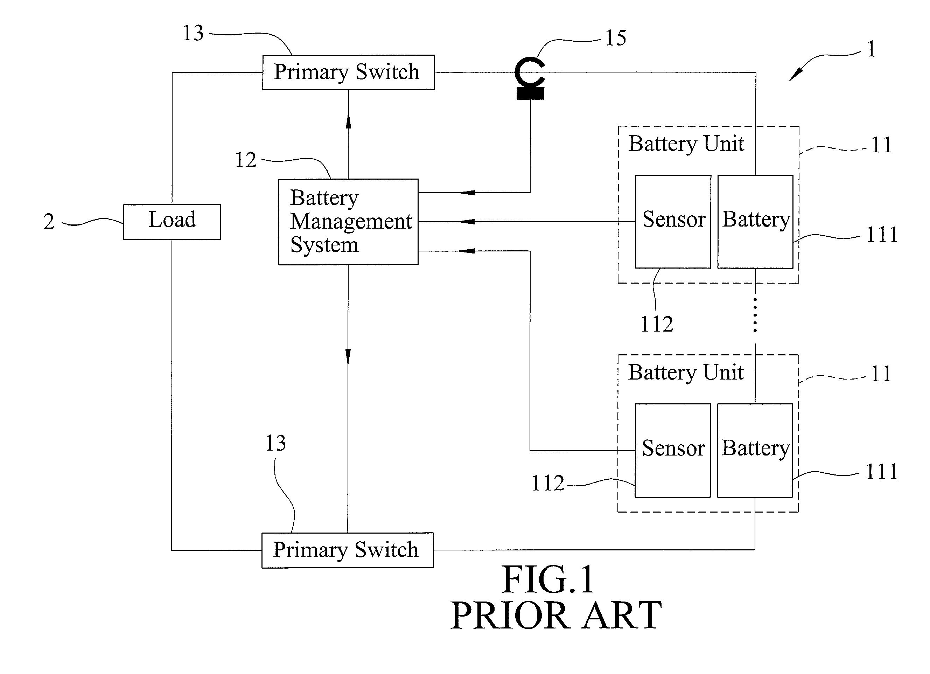

Referring to Figure 1, a conventional battery management system 12 is adapted for use in a power supplying device 1. The power supplying device 1 is used for providing electric power to a load 2, and includes a plurality of battery units 11, two primary switches 13, and a current sensor 15. Each of the primary switches 13 is electrically connected between the series-connected battery units 11 and the load 2. Each of the battery units 11 includes a battery 111 and a sensor 112 which is adapted to sense a voltage, a temperature, and/or a current of the battery 111.

The battery management system 12 is connected electrically to the sensors 112, the current sensor 15 and the primary switches 13, and performs real-time monitoring on the voltage, the temperature, and the current of each battery 111 during charge operation, so as to control the primary switches 13 to make or break electrical connection.

When the power supplying device 1 is abnormal or requires repair, the primary switches 13 have to be switched off while the series-connected battery units 11 may still output a high voltage, thereby resulting in safety concerns. In US patent no. 7990105 B2, a safety plug is provided to isolate each of the battery units 11 during maintenance for ensuring safety of personnel. However, when the power supplying device 1 is used in an electric vehicle (e.g., a car or a boat), it may suffer from electricity leakage, being soaked in water, or impact. The safety plug cannot provide protection in such situations.

Therefore, an object of the present invention is to provide a battery management device that may perform real-time monitoring on batteries and that may reduce safety concerns arising from high voltage of the batteries.

According to one aspect of the present invention, a battery management device for controlling supply of electric power from a battery device to a load of an electric device is provided. The battery device includes a plurality of battery units that are electrically connected. Each of the battery units is independently controllable to switch between an output enabled state and an output disabled state. The battery management device comprises:
a device sensor configured to detect a present state of the electric device, and to output a detection signal corresponding to the present state of the electric device;
a determining module that stores a predetermined threshold, that is coupled to the device sensor for receiving the detection signal, and that is configured to compare the detection signal with the predetermined threshold, and to output a device state signal according to a comparison result between the detection signal and the predetermined threshold, the device state signal indicating whether the electric device is in a normal state or an abnormal state; and
a control module to be electrically connected to each of the battery units, electrically connected to the determining module for receiving the device state signal, and configured to switch each of the battery units to the output disabled state and thereby stop supply of the electric power to the load when the device state signal indicates that the electric device is in the abnormal state.

Another object of the present invention is to provide a power supplying system that that may reduce safety concerns arising from high voltage of the batteries.

According to another aspect of the present invention, a power supplying system for an electric device is provided. The electric device includes a load. The power supplying system comprises:
a battery device including a plurality of battery units that are electrically connected for providing electric power to the load, each of the battery units being independently controllable to switch between an output enabled state and an output disabled state; and
a battery management device of the present invention.

According to yet another aspect of the present invention, an electric device comprises a load and a power supplying system of the present invention.

Other features and advantages of the present invention will become apparent in the following detailed description of the preferred embodiment with reference to the accompanying drawings, of which:
Figure 1 is a block diagram illustrating a power supplying device including a conventional battery management system;
Figure 2 is a block diagram illustrating a preferred embodiment of an electric device according to the present invention; and
Figure 3 is a block diagram illustrating a control module of a battery management device of the preferred embodiment.

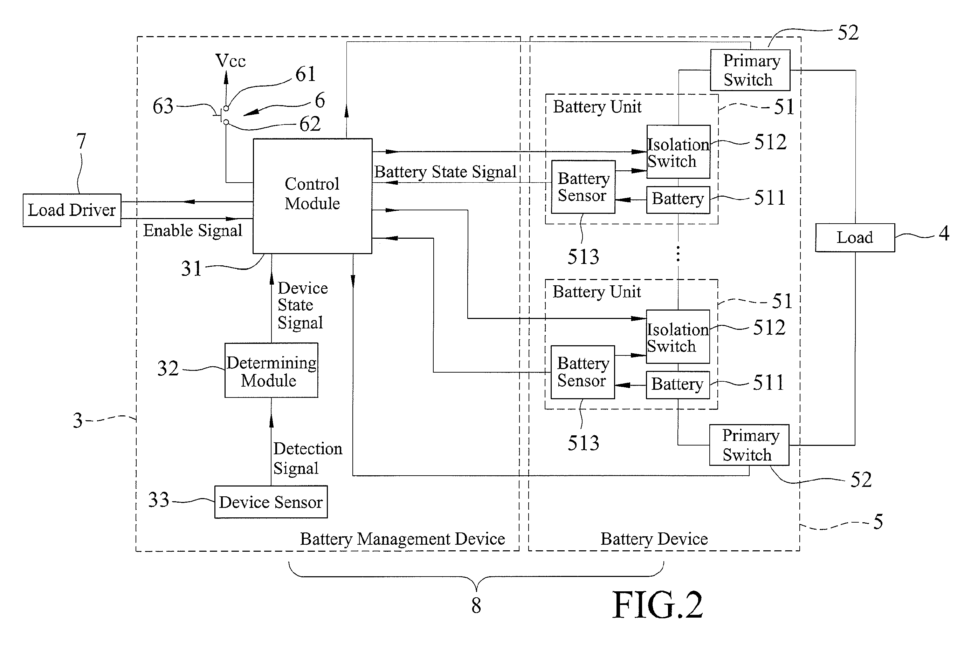

Referring to Figure 2, the preferred embodiment of the electric device according to this invention is shown to include a load 4, a power supplying system 8, and a load driver 7.

The load 4 operates using a high direct current (DC) voltage. The power supplying system 8 is configured to provide the DC voltage to the load 4, and includes a battery device 5 and a battery management device 3.

In this embodiment, the battery device 5 includes a plurality of battery units 51 electrically connected in series and two primary switches 52. Each of the battery units 51 includes a battery 511, an isolation switch 512 connected electrically to the battery 511 in series, and a battery sensor 513. The battery 511 may be composed of several lithium Manganese battery cells, lithium iron battery cells, or other types of battery cells connected in series and/or in parallel. The battery sensor 513 is adapted to sense a state of the battery 511 (e.g., a voltage, a current, and/or a temperature of the battery 511), and to output, according to the state of the battery 511, a battery state signal that indicates whether the corresponding battery unit 51 is in a normal state or an abnormal state.

Although the battery units 51 are connected in series, there is no direct electrical connection among the batteries 511 of the battery units 51 since the batteries 511 are isolated from each other using the isolation switches 512. Each of the battery units 51 is independently controllable to switch between an output enabled state and an output disabled state via control of the isolation switch 512 thereof.

Each of the primary switches 52 is connected electrically between the series-connected battery units 51 and the load 4. In other embodiments, the battery device 5 may include only one primary switch 52.

The battery management device 3 includes a device sensor 33, a determining module 32, a control module 31 and an activation switch 6.

The device sensor 33 is adapted to detect a present state of the electric device, and to output a detection signal corresponding to the present state of the electric device. In detail, the device sensor 33 may include a voltage/current converter, an accelerometer, a hygrometer, etc., so as to detect: a voltage condition of the battery device 5; a temperature condition of the battery device 5; a discharge current condition of the battery device 5; a load condition of the electric device; whether the electric device suffers from a short circuit; whether the electric device suffers from electricity leakage; whether the electric device is subjected to an impact; a humidity condition of the electric device, and the like. In this embodiment, the detection signal outputted by the device sensor 33 has a detection value corresponding to the present state of the electric device.

The determining module 32 stores a predetermined threshold value, is coupled to the device sensor 33 for receiving the detection signal, compares the detection signal with the predetermined threshold value, and outputs a device state signal according to a comparison result between the detection signal and the predetermined threshold value. The device state signal indicates whether the electric device is in a normal state or an abnormal state. The abnormal state may include an overvoltage state, an undervoltage state, an overload state, a short-circuit state, an electricity leakage state, an impact state, a humid state, or a water soaked state, which may be determined by the determining module 32 using the detection signal.

The control module 31 is electrically connected to the determining module 32 for receiving the device state signal, and to the battery sensor 513 of each of the battery units 51 for receiving the battery state signal, and controls the primary switches 512 and the isolation switch 512 of each of the battery units 51 to make or break electrical connection according to the device state signal from the determining module 32, and the battery state signals from the battery sensors 513. In detail, the control module 31 controls the primary switches 52 to break electrical connection between the battery units 51 and the load 4, and controls the isolation switch 512 of each of the battery units 51 to break electrical connection (i.e., to switch each of the battery units 51 to the output disabled state), to thereby stop supply of the electric power to the load 4 when the device state signal indicates that the electric device is in the abnormal state, and/or the battery state signal of one of the battery units 51 indicates that the corresponding battery 511 is in the abnormal state. In this condition, there is no electrical connection between any two of the battery units 51, so that high voltage is not provided in the electric device.

The activation switch 6 has a first terminal 61 to receive a bias voltage Vcc, a second terminal 62 electrically connected to the control module 31, and a control terminal 63 to receive an activation signal. The activation switch 6 is controlled by the activation signal to make or break electrical connection between the first terminal 61 and the second terminal 62 thereof to thereby control supply of the bias voltage Vcc to the control module 31.

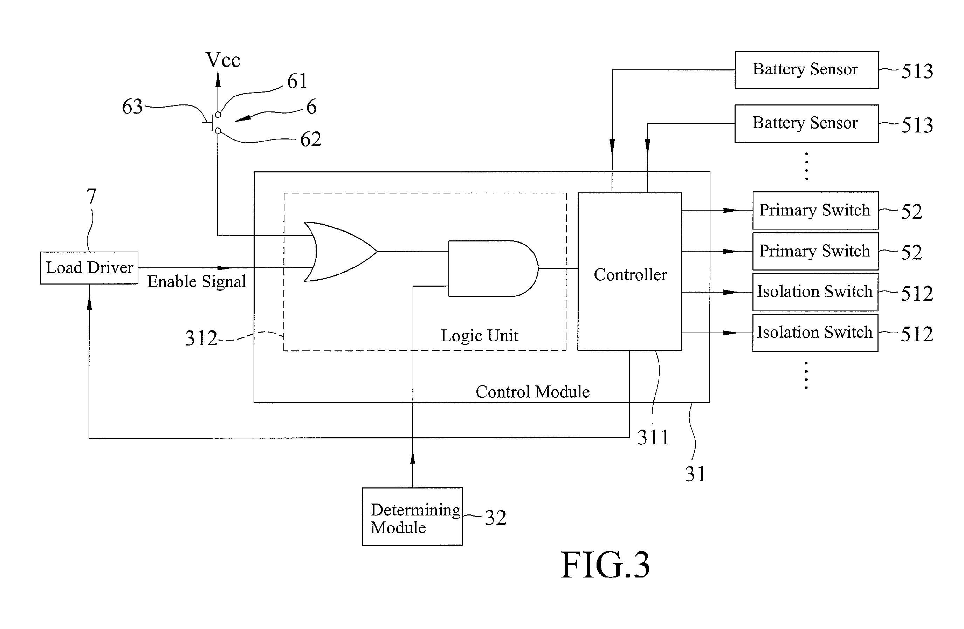

Referring to Figure 3, in this embodiment, the control module 31 includes a logic unit 312 and a controller 311. The logic unit 312 is coupled to the determining module 32 for receiving the device state signal, to the activation switch 6 for receiving the bias voltage Vcc, and to the load driver 7 for receiving an enable signal. The controller 311 is coupled to the logic unit 312, the primary switches 52, and the isolation switch 512 of each of the battery units 51.

The logic unit 312 is configured to output an operating signal to the controller 311 when the logic unit 312 receives one of the enable signal and the bias voltage Vcc, and receives the device state signal indicative of the electric device being in the normal state. The controller 311 is responsive to the operating signal to control the primary switches 52 to make electrical connection and to control the isolation switch 512 of each of the battery units 51 to make electrical connection (i.e., to switch each of the battery units 51 to the output enabled state). Otherwise, the controller 311 controls the primary switches 52 to break electrical connection and to control the isolation switch 512 of each of the battery units 51 to break electrical connection (i.e., to switch each of the battery units 51 to the output disabled state).

When the electric device is turned on, the activation signal is provided to the activation switch 6, so that the bias voltage Vcc is transmitted to the logic unit 312. At this time, when the device state signal indicates that the electric device is in the normal state, the logic unit 312 outputs the operating signal to the controller 312, so that the controller 312 controls the primary switches 52 and the isolation switch 512 of each of the battery units 51 to make electrical connection, thereby enabling the battery device 5 to output electric power to the load 4 for normal operation of the electric device. After the battery device 5 is enabled to output electric power, the load driver 7 receives electric power from the battery device 5 to output the enable signal. It should be noted that the load driver 7 is used for driving functions of the load 4, and is not designed for battery management. Through such a design, the activation switch 6 is not required to be always closed after the electric device is turned on, and the battery device 5 can still provide electric power normally. At the same time, the controller 311 may transmit messages to the load driver 7 for monitoring purposes.

To sum up, when the electric device is in an abnormal state or requires repair, the battery management device 3 may operate to isolate the battery units 51 so as to prevent output of high voltage, thereby ensuring safety of personnel.

## Claims

1. A battery management device (3) for controlling supply of electric power from a battery device (5) to a load (4) of an electric device, the battery device (5) including a plurality of battery units (51) that are electrically connected, each of the battery units (51) being independently controllable to switch between an output enabled state and an output disabled state, said battery management device (3) **characterized by**:
a device sensor (33) configured to detect a present state of the electric device, and to output a detection signal corresponding to the present state of the electric device;
a determining module (32) that stores a predetermined threshold, that is coupled to said device sensor (33) for receiving the detection signal, and that is configured to compare the detection signal with the predetermined threshold, and to output a device state signal according to a comparison result between the detection signal and the predetermined threshold, the device state signal indicating whether the electric device is in a normal state or an abnormal state; and
a control module (31) to be electrically connected to each of the battery units (51), electrically connected to said determining module (32) for receiving the device state signal, and configured to switch each of the battery units (51) to the output disabled state and thereby stop supply of the electric power to the load (4) when the device state signal indicates that the electric device is in the abnormal state.

2. The battery management device (3) as claimed in Claim 1, **characterized in that** the detection signal outputted by said device sensor (33) has a detection value, and the predetermined threshold stored by said determining module (32) is a predetermined value.

3. The battery management device (3) as claimed in Claim 1 or 2, the battery device (5) further including a primary switch (52) connected electrically between the battery units (51) and the load (4), said battery management device (3) **characterized in that** said control module (31) is further configured to control the primary switch (52) to break electrical connection between the battery units (51) and the load (4) and thereby stop supply of the electric power to the load (4) when the device state signal indicates that the electric device is in the abnormal state.

4. The battery management device (3) as claimed in Claim 1 or 2, the battery device (5) further including a primary switch (52) connected electrically between the battery units (51) and the load (4), said battery management device (3) **characterized in that** said control module (31) is further disposed to receive, from each of the battery units (51), a battery state signal indicating whether the battery unit (51) is in a normal state or an abnormal state, and said control module (31) is further configured to control the primary switch (52) to break electrical connection between the battery units (51) and the load (4) and to switch each of the battery units (51) to the output disabled state and thereby stop supply of the electric power to the load (4) when the battery state signal of one of the battery units (51) indicates that the one of the battery units (51) is in the abnormal state.

5. The battery management device (3) as claimed in Claim 1 or 2, further **characterized by** an activation switch (6) that has a first terminal (61) to receive a bias voltage (Vcc), a second terminal (62) electrically connected to said control module (31), and a control terminal (63) to receive an activation signal, said activation switch (6) being controlled by the activation signal to make or break electrical connection between said first terminal (61) and said second terminal (62) thereof to thereby control supply of the bias voltage (Vcc) to said control module (31).

6. The battery management device (3) as claimed in Claim 5, the battery device (5) further including a primary switch (52) connected electrically between the battery units (51) and the load (4), said battery management device (3) **characterized in that** said control module (31) includes:
a logic unit (312) coupled to said determining module (32) for receiving the device state signal, and coupled to said activation switch (6) for receiving the bias voltage (Vcc); and
a controller (311) coupled to said logic unit (312), and to be coupled to the primary switch (52) and each of the battery units (51);
wherein said logic unit (312) is configured to output an operating signal to said controller (311) when said logic unit (312) receives the bias voltage (Vcc) and the device state signal indicative of the electric device being in the normal state; and
wherein said controller (311) is responsive to the operating signal to control the primary switch (52) to make electrical connection and to switch each of the battery units (51) to the output enabled state.

7. The battery management device (3) as claimed in any one of the preceding claims, **characterized in that** the present state of the electric device detected by said device sensor (33) includes at least one of:
a voltage condition of the battery device (5);
a temperature condition of the battery device (5);
a discharge current condition of the battery device (5) ;
a load condition of the electric device;
whether the electric device suffers from a short circuit;
whether the electric device suffers from electricity leakage;
whether the electric device is subjected to an impact; and
a humidity condition of the electric device.

8. A power supplying system (8) for an electric device, the electric device including a load (4), said power supplying system (8) **characterized by**:
a battery device (5) including a plurality of battery units (51) that are electrically connected for providing electric power to the load (4), each of said battery units (51) being independently controllable to switch between an output enabled state and an output disabled state; and
a battery management device (3) as claimed in Claim 1, said battery management device (3) being electrically connected to said battery units of said battery device.

9. The power supplying system (8) as claimed in Claim 8, **characterized in that** said battery units (51) are electrically connected in series.

10. The power supplying system (8) as claimed in Claim 8, **characterized in that**:
said battery device (5) further includes a primary switch (52) to be connected electrically between said battery units (51) and the load (4);
each of said battery units (51) is configured to output a battery state signal that indicates whether said battery unit (51) is in a normal state or an abnormal state; and
said control module (31) further receives the battery state signals from said battery units (51), and is further configured to control said primary switch (52) to break electrical connection between said battery units (51) and the load (4) and to switch each of said battery units (51) to the output disabled state and thereby stop supply of the electric power to the load (4) when the battery state signal of one of said battery units (51) indicates that said one of said battery units (51) is in the abnormal state.

11. The power supplying system (8) as claimed in Claim 10, further **characterized in that** each of said battery units (51) includes:
a battery (511);
an isolation switch (512) electrically connected to said battery (511) in series and electrically connected to and controlled by said control module (31) to make or break electrical connection; and
a battery sensor (513) adapted to sense a state of said battery (511) and to output the battery state signal according to the state of said battery (511);
wherein said battery (511) and said isolation switch (512) of each of said battery units (51) are electrically connected to at least another one of said battery units (51) in series; and
wherein each of said battery units (51) is in the output enabled state when said isolation switch (512) thereof makes electrical connection, and is in the output disabled state when said isolation switch (512) thereof breaks electrical connection.

12. The power supplying system (8) as claimed in Claim 11, further **characterized in that** the state of said battery (511) sensed by said battery sensor (513) includes at least one of a voltage, a current and a temperature of said battery (511).

13. The power supplying system (8) as claimed in Claim 8, further **characterized by** an activation switch (6) that has a first terminal (61) to receive a bias voltage (Vcc), a second terminal (62) electrically connected to said control module (31), and a control terminal (63) to receive an activation signal, said activation switch (6) being controlled by the activation signal to make or break electrical connection between said first terminal (61) and said second terminal (62) thereof to thereby control supply of the bias voltage (Vcc) to said control module (31); and
a load driver (7) coupled to said control module (31) and configured to output an enable signal;
wherein said battery device (5) further includes a primary switch (52) to be connected electrically between said battery units (5) and the load (4); and
wherein said control module (3) includes:
a logic unit (312) coupled to said determining module (32) for receiving the device state signal, coupled to said activation switch (6) for receiving the bias voltage (Vcc), and coupled to said load driver for receiving the enable signal; and
a controller (311) coupled to said logic unit (312), and coupled to said primary switch (52) and each of said battery units (51);
wherein said logic unit (312) is configured to output an operating signal to said controller (311) when said logic unit (312) receives one of the bias voltage (Vcc) and the enable signal and receives the device state signal indicative of the electric device being in the normal state; and
wherein said controller (311) is responsive to the operating signal to control said primary switch (52) to make electrical connection and to switch each of said battery units (51) to the output enabled state.

14. The power supplying system (8) as claimed in Claim 13, **characterized in that** said load driver (7) is configured to receive electric power from said battery device (5) to output the enable signal after said primary switch (52) is controlled to make electrical connection and each of said battery units (51) is switched to the output enabled state upon receipt of the bias voltage (Vcc) and the device state signal indicative of the electric device being in the normal state by said control module (31).

15. An electric device **characterized by**:
a load (4); and
a power supplying system (8) as claimed in any one of Claims 8 to 14, said power supplying system being electrically connected to said load.
